# EUROPEAN PATENT APPLICATION

(11) **EP 1 308 805 A1**
(43) Date of publication of application: **07.05.2003**
(21) Application number: 01850180.9
(22) Date of filing: 31.10.2001
(51) Int. Cl.: G05B 19/042, G06K 19/07

(54) **Method and apparatus for controlling a device from a smart card**

(71) Applicant: TELEFONAKTIEBOLAGET LM ERICSSON, 126 25 Stockholm (SE)
(72) Inventor: Janez-Gonzales, José Javier, 48901 Baracaldo (Vizcaya) (ES); Sanches-Yoldi, César, 48630 Gorliz (Vizcaya) (ES)
(74) Representative: Stenborg, Anders Vilhelm

(57) **Abstract**

The present invention relates to control of devices and in particular to control of hardware peripherals (14) connected to a main device. A smart card (20) is inserted in a main device (10) as the central controller of a remote terminal unit (3). Application software in the smart card issues orders to control the hardware peripherals (14) connected to the main device (10). These orders are transformed into standard commands belonging to a standard communication protocol between the smart card (20) and the central unit (16), preferably as part of an argument of the standard command. The standard commands are sent to a CPU (18) of a central unit (16) in the main device (10), where the orders about control measures are extracted and executed as read/write orders on interfaces (26, 28, 30, 32, 34) directly to hardware peripherals (14). The central unit (16) is provided with means (50) for executing general read/write actions on standard interfaces (26, 28, 30, 32, 34).

## Description

### TECHNICAL FIELD

The present invention related generally to devices, methods and systems involving control of a device and in particular to such control offered by a smart card.

### BACKGROUND

Many systems of today make use of machine to machine communication, in particular in systems of scattered remote terminal units (RTUs) and a central server. Typical examples are alarm systems, vending machines monitoring, fleet management, car security systems, utility meters monitoring, etc. The number of variations of different systems using machine to machine communication is rapidly growing.

Remote terminal units can be connected to the server via several means ranging from analogue landline modems to cellular communication modules. Cellular communication modules are gaining increased public acceptance, since they are much easier to deploy because they are wireless. They also allow the use of new services like SMS (Short Message Service) and GPRS (General Packet Radio Service) that normally are not available in the landline network. A typical wireless remote terminal unit includes a so-called cellular module of a relevant standard, e.g. GSM (Global System for Mobile communications) or UMTS (Universal Mobile Telecommunication System).

A typical remote terminal unit of today comprises a mobile equipment (ME), having a central processor unit (CPU) handling e.g. the cellular communication. Hardware peripherals (HWP) are connected to the ME via an external remote terminal unit controller. This additional controller interfaces on one side to hardware peripherals, such as e.g. vending machines, alarms, or CAN (Controller Area Network) buses in e.g. a vehicle. On the other side the additional controller interfaces via an UART (Universal Asynchronous Transmitter Receiver) serial communication link to the CPU of the ME. The control of the ME is typically performed via so-called AT commands, which enables access to the cellular module functionality.

In such a scenario, the CPU of the ME only offers functionality of the used data bearers, e.g. Circuit Switched Data (CSD) or General Packet Radio Service (GPRS), and Short Message Service (SMS). The additional external remote terminal unit controller is always necessary to command the module and at the same time interface to the other hardware devices. In such a view, this external CPU can be viewed as the main CPU of the RTU, since the software for controlling the overall operation of the RTU will run in this CPU. The CPU of the ME will more or less only provide a data transport function plus the speech and the SMS service.

Such systems have the disadvantages that the design of the RTU always has to involve a CPU with interfaces to both the cellular module and to the external hardware peripherals, such as ADC (Analogue-to Digital Converters), DAC (Digital-to-Analogue Converters), temperature sensors, pressure sensors, horn, etc. This is to some extent inconvenient because it does not provide a uniform development environment for all applications and also involves quite a lot of hardware design. Moreover, the RTU becomes relatively expensive, since it involves a separate CPU.

In the International Patent Application WO 01/31953 A1, a method and system for controlling a third item of equipment with a SIM (Subscriber Identity Module) card are disclosed. A radio communication module is connected on one hand to a SIM card and on the other hand to a third item. Here SIM Application Toolkit (STK) commands are used for the communication between the SIM card and the radio communication module, while another type of command language is used in the communication between the radio communication module and the third item. Means for converting the STK commands to commands of the other language is provided within the radio communication module. This solution increase the functionality provided to the third item. However, in a typical case the third item is connected by a serial interface, and the third item still has to include a microprocessor or some other intelligence to be able to process the commands. Most problems with prior art solutions still remain.

A possible solution for not requiring the "external" CPU would be to include all necessary intelligence in the CPU of the ME. This is not convenient since it complicates the type approval of the unit. Besides, the CPU of the ME in the module is not designed to include any large amounts of extra software, but the relevant cellular communication software. The extra application software may cause conflict with the already existing cellular communication software and it is not a flexible solution, since every application has different software in the ME and thereby a new type approval process would be needed.

### SUMMARY

Wireless machine to machine communication of prior art thus presents a number of disadvantages. Remote terminal units tend to be rather expensive due to the requirement of an additional CPU. Furthermore, solutions according to prior art do not provide any uniform development environment for different applications and do involve a non-negligible hardware design.

An object of the present invention is thus to provide an improved system and method for control of devices. A further object is to provide devices of simplified design, which still provides for added value and ability to run developed application software.

The above objects are achieved by devices, systems and methods according to the enclosed patent claims. In general words, a smart card connected to a device unit becomes the central controller of the device unit and in particular a controller of any hardware peripherals connected to the device. An application software controlling the remote terminal unit is stored in the smart card. This application software issues orders to interact with the external hardware peripherals. These orders are conveyed onto a standard communication protocol for the normal communication between the smart card and the device and sent via the interface between the smart card and the device. The device interprets the conveyed orders within the communication commands and execute them as read/write orders on communication links directly to hardware peripherals. The device is provided with means for executing general read/write actions on standard communication links. Preferably, the smart card is a SIM card and the standard communication protocol is a protocol for STK commands, whereby the read/write orders preferably are incorporated as at least a part of the argument of the STK command. In a cellular system, the device is typically a mobile equipment.

One advantage with the present invention is that the smart card CPU is used as the controlling CPU, which means that there is no need for any additional CPU between the device CPU and the hardware peripherals. Furthermore, since the software of the smart card is easily exchanged, new applications or further developments may be incorporated without any need for hardware design. The design of device can also be identical for many different types of applications.

### BRIEF DESCRIPTION OF THE DRAWINGS

The invention, together with further objects and advantages thereof, may best be understood by making reference to the following description taken together with the accompanying drawings, in which:
FIG. 1a is a cellular communication system having a central server and a number of remote terminal units;
FIG. 1b is a wired communication system having a central server and a number of remote terminal units;
FIG. 2 is a remote terminal unit according to prior art;
FIG. 3 is an embodiment of a remote terminal unit according to the present invention;
FIG. 4 is a schematic illustration of an example of a communication between a mobile equipment, hardware peripherals and a SIM card according to the present invention for a write order;
FIG. 5 is a schematic illustration of an example of a communication between a mobile equipment, hardware peripherals and a SIM card according to the present invention for a read order;
FIG. 6 is a schematic illustration of an example of a communication between a mobile equipment, hardware peripherals and a SIM card according to the present invention using a menu selection function; and
FIG. 7 is a flow diagram illustrating the basic steps of a method according to the present invention.

### DETAILED DESCRIPTION

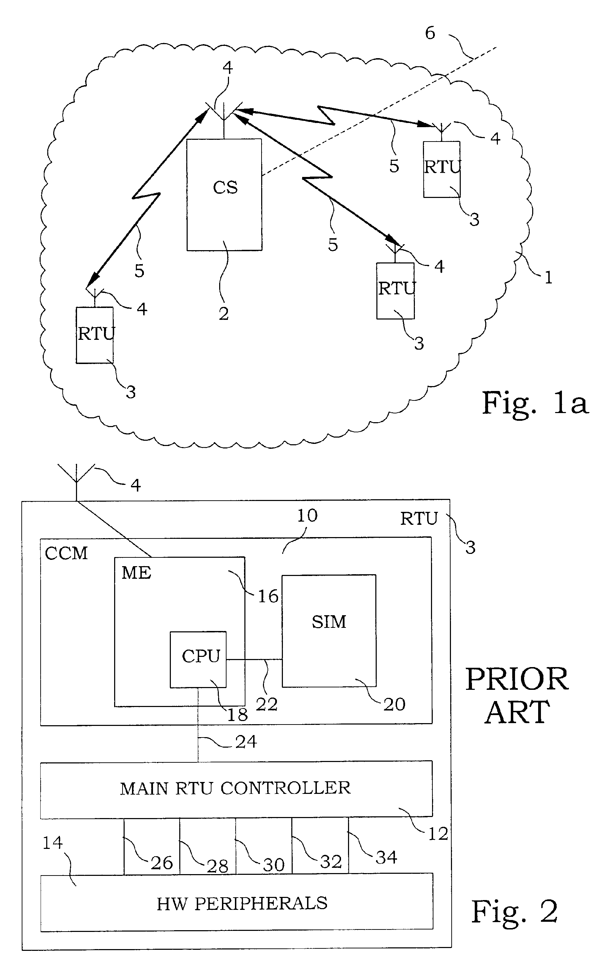

The present invention is typically applicable to systems utilizing machine to machine communication for control purposes. Such systems typically comprise scattered remote terminal units (RTUs) and a central server. Fig. 1a illustrates such a general communication system 1 based on a cellular communication. A central server 2 is connected to a number of RTUs 3 by means of radio communication, indicated by antennas 4 and zigzag arrows 5. The radio communication can be performed according to any suitable radio communication technique, such as GSM or UMTS. The particular choice of radio communication is not of crucial importance for the present invention. Such communication technique is used in a conventional manner and thereby assumed to be known by anyone skilled in the art and will therefore not be further discussed. However, in the following description of a particular embodiment of the present invention, a GSM communication is assumed to be used. The central server 2 may be further connected to other units by means of external links, illustrated by the broken line 6. The external link 6 may be based on a physical link, radio transmission or any other equivalent techniques. The system 1 may by use of external links 6 be a part system of a superior system.

Fig. 1b illustrates a similar general communication system 8 based on a wired communication. A central server 2 is connected to a number of RTUs 3 by physical links 7. The communication can be performed according to any suitable communication technique for physically linked systems. The particular choice of communication is not of crucial importance for the present invention. Such communication technique is used in a conventional manner and thereby assumed to be known by anyone skilled in the art and will therefore not be further discussed. The central server 2 may be further connected to other units by means of external links, illustrated by the broken line 6. The external link 6 may be based on a physical link, radio transmission or any other equivalent techniques. The system 1 may by use of external links 6 be a part system of a superior system.

Anyone skilled in the art realizes that systems being a mix between cellular and physically linked communication systems also are of interest for the present invention.

In order to explain the benefits of the present invention, a typical remote terminal unit of prior art is first briefly described, assuming the use of a cellular communication system. Fig. 2 illustrates a typical remote terminal 3 of prior art, comprising a cellular communication module (CCM) 10, a main RTU controller 12 and hardware peripherals (HWP) 14. The cellular communication module 10 in turn comprises a mobile equipment unit (ME) 16 having a central processor unit (CPU) 18. A SIM card 20 is in many cases connected to the CPU 18 of the ME 16 by a connection 22. The main RTU controller 12 communicates in this RTU with the CPU 18 via a serial communication link 24, e.g. UART (Universal Asynchronous Transmitter Receiver). The main RTU controller 12 is further interfaced with HWP 14 via interfaces 26, 28, 30, 32, 34. These interfaces could be of any type, e.g. the type of digital input, digital output, interintegrated circuit bus (I2C), analogue-to-digital converter (ADC) or other conventional interface types.

In this system, the system interface is the interface of the cellular module to everything else but the antenna connector and the SIM/ME interface. Here is included power, grounds, audio, serial ports with data and control signals and on/off switching. Every signal has its own well-defined behavior. The RTU according to Fig. 2 exhibits the disadvantages described in the summary section above.

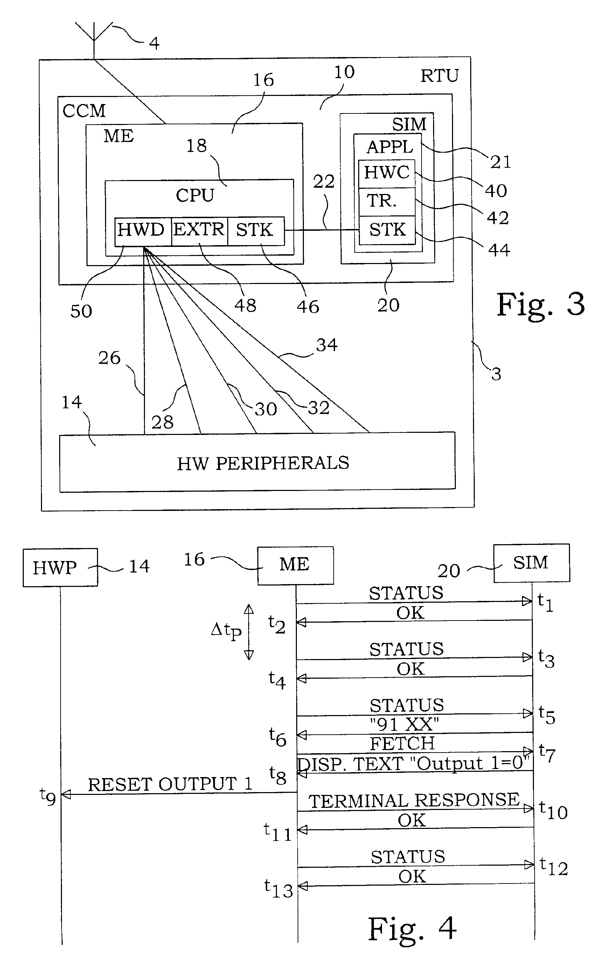

A preferred embodiment of a remote terminal in a cellular communication system according to the present invention is illustrated in Fig. 3. The resemblance as well as the differences to the RTU of Fig. 2 are obvious. A RTU 3 according to the present invention also comprises a cellular communication module (CCM) 10 and HW peripherals 14. The CCM 10 comprises a ME 16, being responsible for handling the mobile communication with the central server via an antenna 4 and radio communication. The main part of the ME 16 is also here a CPU 18, which comprises standard software for performing mobile communication, not shown explicitly in the figure. Also as might be the case in some embodiments according to prior art, a SIM card 20 is connected to the CPU 18.

Interfaces 26, 28, 30, 32, 34 to the HWP 14 are also present, but according to the present invention, they are connected directly to the ME 16. The interfaces are general-purpose digital inputs and outputs, synchronous serial interfaces and for example A/D inputs and D/A outputs or pulse width modulators (PWM). A synchronous serial interface can be of several types such as SPI (Serial Peripheral Interface), Microwire or I2C, for example. They allow the interconnection of several peripherals simultaneously. These peripherals can then be individually addressed for read or write operations. These buses are mainly intended for interconnecting devices on the same PCB (Printed Circuit Board). However, the solution can also be extended to the provision of field buses like CAN (Controller Area Network) buses. For this purpose, the CPU 18 preferably comprises a hardware driver unit 50, capable of reading and/or writing these standard types of interfaces. However, the HW driver unit 50 does not comprise any application specific means, but rather effectuates commands provided externally. Examples of HW driver functionality is described somewhat more in detail further below.

According to the present invention, application software 21 in the SIM card 20 comprises among other things HW control means 40 for controlling HW peripherals. This HW control means 40 within the application software 21 comprises the functions necessary to control the actual HW peripherals 14 included in the RTU 3. The HW control means 40 thus in a sense replaces the functionality earlier present in the main RTU controller 12 (Fig. 2). The HW control means 40 is preferably loaded in an internal CPU of the SIM card 20. The HW control means 40 thus provides orders for controlling a HW peripheral, in most cases a read/write order. This read/write order now has to be sent to be executed on the interfaces 26, 28, 30, 32, 34 to the HW peripherals 14.

A typical SIM card 20 of today is often provided with means for supporting application software 21 that uses a SIM Application Toolkit (STK) 44 framework. In a conventional cellular communication system, STK allows the personalization of the SIM cards providing specific operator services bundled together with the subscription. STK typical applications appear in form of added menus to the mobile phone MMI (Man Machine Interface) and allow accessing a range of services that mainly use SMS (Short Message Service) as transport media. STK defines a command interface between the SIM and the ME and thus allows applications, running in the SIM card to interact and operate with any ME that supports the required specific mechanisms. So-called proactive SIM mechanisms are especially interesting for the purpose of the present invention. By a corresponding STK means 46 in the CPU 18 of the ME 16, the SIM card 20 and the CPU 18 can communicate using STK.

According to GSM standard 11.14 a proactive SIM mechanism allows the SIM card 20 to issue a series of commands to the ME 16.

According to the present invention, the application software 21 of the SIM card 20 issues orders to control the hardware peripherals 14. These orders are transformed into a STK command or issued directly as an STK compatible command. Means for transforming 42 a read/write order into a STK command is therefore comprised in the application software 21 either as a separate part of the application software or integrated with the software issuing the orders. Preferably, the transforming is performed by incorporating the read/write order in an argument of a STK command. When different interfaces or different addresses in an interface exist, it is necessary to also specify to which interface and/or to which address the order should be directed. A label of the particular interface and/or address of interest is preferably incorporated in the same STK command. This will be illustrated by examples further below. In such a way, an order provided by the HW control means 40 is transformed in the means 42 to a STK command, which in turn can be communicated over to the ME 16 by the STK means 44.

In the description above, the total procedure is divided into separate steps of issuing an order, transforming the order into a command and transferring the order. Furthermore, three separate means 40, 42, 44 are illustrated for providing these actions. As anyone skilled in the art understands, these means may be provided as hardware, software or a combination thereof. Furthermore, the means may be provided as separate means or integrated at least to a part with each other. Preferably, the means 40, 42 and 44 are as illustrated comprised in application software 21 of the SIM card 20. The means 40 and 42 are preferably integrated in one and the same software routines, which directly provides STK commands bearing the information of an hardware peripheral order.

In the ME 16, the STK means 46, preferably provided in software in the CPU 18, receives the STK command from the SIM card 20. According to the present invention, the ME 16 further comprises extraction means 48 for extracting a read/write order incorporated in a STK command. Preferably, the argument of an STK command is interpreted to extract the read/write order. Also, a label of a target interface and/or address can preferably be retrieved from the STK command. In a preferred embodiment, the extraction means 48 constitutes a special interpretation of read/write STK commands. This will be illustrated by examples further below. The extracted label is subsequently used by the HW driver unit 50 to determine the interface on which the HW driver unit 50 should execute the extracted order.

As for the SIM card, the different means 46, 48 and 50 for handling the STK commands and hardware peripherals orders may be provided as hardware but preferably as software or a combination thereof. The means 46, 48 and 50 may further be provided as separate parts or integrated partly or in a whole.

In order to control the HW peripherals 14, the HW control means 40 in the application software 21 in the SIM card 20 requires possibilities for outputs to and inputs from the HW peripherals 14, provided by the HW driver unit 50 within the ME CPU 18. Inputs from the hardware peripherals as well as different network events could be used to decide what measures are to be taken, and these measures are issued as output orders. The HW control means 40 thus sometimes has the need to either read from or write to the HW peripherals 14.

One example of a communication in an embodiment of the present invention is illustrated in Fig. 4, showing a case where the HW control means in the SIM card 20 wants to provide the information "reset" to a HW peripheral 14, which is performed by setting an output No. 1 equal to "0". The system is assumed to be initialized, e.g. the STK means in the SIM card 20 has got knowledge of the STK means in the ME 16, indicating which STK commands the ME 16 supports. Typically, the ME 16 has communicated to the SIM card 20 which STK commands are supplied by the ME 16. Furthermore, a poll interval has been determined, which tells the ME 16 how often to send status data to the SIM card 20. This poll interval can normally be set as small as 0.1 seconds.

At a time t₁, a status message is sent from the ME 16 to the SIM card 20, allowing the SIM to send a proactive SIM command. The SIM card 20 has at that occasion no task to request, and returns only an "OK" message at time t₂ as a confirmation that no proactive SIM command is to expect at the moment. The ME 16 waits during a poll interval Δt_{P} and sends then a new status message at time t₃. Also this time, an "OK" message is returned at t₄. After another poll interval, a third status message is sent at t₅. Now, the HW control means in the SIM card 20 has concluded that the digital output "1" should be reset. A message "91 XX" is returned to the ME 16 at the time t₆ in order to inform the ME 16 that the SIM card 20 wants to deliver a message. The ME 16 answers at t₇ by sending a fetch message, and the SIM card 20 responds at t₈ in accordance with a command "DISPLAY TEXT". This command is for the conventionally used STK used for displaying a text string on a screen, e.g. on a mobile telephone. However, according to the present invention, the interpretation of this command is generalized to mean a general writing operation, e.g. on one of the outputs of the ME 16. The transforming means of the SIM card 20 transforms the order "reset", intended for the output No. 1 to "Output 1=0" and incorporate this into the argument of the STK command "DISPLAY TEXT". The command DISPLAY TEXT "Output 1=0" is sent to the ME 16 at t₈. The extraction means of the ME 16 interprets the message as a generalized write command and extracts the label of the intended interface as "Output 1" and the interprets the "0" as a reset order. Subsequently, at time t₉, the HW driver means of the ME 16 executes a reset of output 1, connected to the HW peripherals 14. In this case, the HW driver means is preferably a digital output port connected to (or contained into) the CPU 18 plus the instructions to set the electrical level in that output port. Thus, the CPU 18 in the ME 16 executes specific instructions that write a zero level to the output port number one. Eventually, this output may be connected to a hardware peripheral, e.g. a lamp that consequently switches off. At time t₁₀, a confirmation message is sent to the SIM card 20, and the SIM card 20 returns an "OK" at time t₁₁, to indicate that no further messages are to send. The ME 16 waits for the polling interval before sending a new status message at t₁₂, on which the SIM card replies with an "OK" at t₁₃.

The above example illustrates the possibilities to supply the HW peripherals with appropriate information from the HW control means in the SIM card, using means which are independent on the particular application. The ME has to be equipped with an extracting means and the SIM card has to be provided with a corresponding transforming means, but the functioning of these means can be kept at a so general level that they are useful for all possible applications. Preferably, the extracting means is supplied as ad-hoc translation software in the CPU of the ME. The ME furthermore has to be provided with HW driver means, which are capable of providing the right type of information onto the interfaces to the HW peripherals. This implies that when e.g. an I2C bus is used, the HW driver means has to support communication on an I2C bus. The HW driver means can be implemented in hardware, software or a combination thereof, preferably comprised in the CPU 18.

The application dependent functionality is collected in the HW control means in the SIM card. By updating the SIM card software or by replacing it, the application functionality can be changed. However, the interface between the SIM card and the ME as well as the interface between the ME and the HW peripherals can be unchanged as long as the type of communication link remains unchanged. In the above example, the ME is totally unaware of the reasons why the Output No. 1 should be reset. It only executes the orders given by the HW control means in the SIM card.

The generalization of the "DISPLAY TEXT" command to be interpreted as write orders on outputs can be used for in principle all type of outputs. A few further examples could be:

| Command | Generalized interpretation |
|---|---|
| DISPLAY TEXT "Output 1 = 0" | Reset the digital Output 1 |
| DISPLAY TEXT "Output 3 =1" | Set the digital Output 3 |
| DISPLAY TEXT "I2C7B = 4F" | Write "4F" in the I2C address 7B |
| DISPLAY TEXT "PWM1 = CF" | Write "CF" in the PWM1 output |

This simply means that text will not be displayed but rather interpreted according to certain rules preferably implemented as new software. Anyone skilled in the art realizes the potentials using these generalized STK write commands.

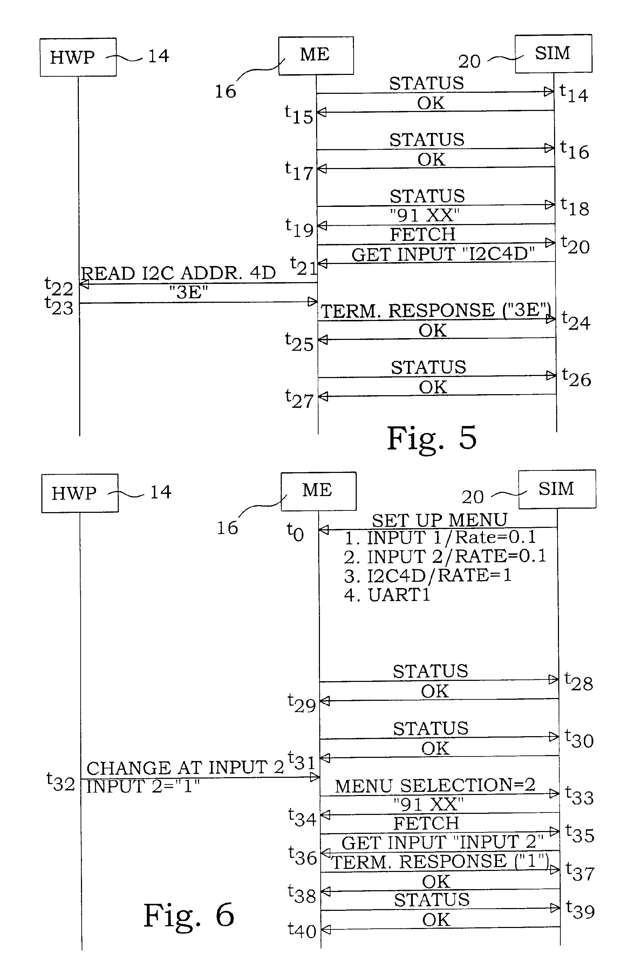

In many situations, the HW control means requires information from the HW peripherals in order to perform its control action. Fig. 5 illustrates a case where the HW control means in the SIM card 20 wants to collect information sent on an I2C link from a HW peripheral 14. The information is "3E" and is provided at address 4D of the I2C link. The system is as before assumed to be initialized and that a poll interval has been determined.

At times t14-t17, status message and "OK" messages are sent back and forth between the ME 16 and the SIM card 20, in analogy with Fig. 4. After another poll interval, a third status message is sent at t18. At this time, the HW control means in the SIM card 20 has concluded that it needs the information provided at the address 4D of the I2C. A message "91 XX" is returned to the ME 16 at the time t19 in order to inform the ME 16 that the SIM card 20 wants to deliver a message. The ME 16 answers at t20 by sending a fetch message, and the SIM card 20 responds at t21 in accordance with a command "GET INPUT". This command is for the conventionally used STK used for sending text to the display and requesting a response. However, according to the present invention, the interpretation of this command is generalized to mean a general reading operation, e.g. on one of the inputs of the ME 16, in this case an I2C. The transforming means of the SIM card 20 transforms the order "read address 4D of the I2C" and incorporates this into the argument of the STK command "GET INPUT". The command GET INPUT "I2C4D" is sent to the ME 16 at t21. The extraction means of the ME 16 interprets the message as a generalized read command and extracts the label of the intended interface as "I2C" and then interprets the "4D" as an address. Subsequently, at time t22, the HW driver means of the ME 16 executes a read request of address "4D" on the I2C, connected to the HW peripherals 14, and a value "3E" is returned at t23. In this case, the HW driver means is preferably an I2C master block within the CPU 18 plus the relevant instructions to operate it (read and write instructions on several registers). Eventually connected to the I2C bus there is a hardware peripheral, e.g. as a concrete example a digital thermometer with the address 4Dh and a specific command set. More specifically it has a READ TEMPERATURE command (AAh) that reads the last temperature conversion result. As a consequence of the received STK command GET INPUT "I2C4D", the CPU 18 programs the address register with the value 4Dh and the command register with the value AAh corresponding to the READ TEMPERATURE command. Then, the I2C master block begins generating clock on the SCL line of the I2C bus and starts sending the address byte 4Dh, followed by the command byte AAh on the SDA line. Immediately after, on the same SDA line, the digital thermometer sends again its address byte 4Dh, followed by the data byte 3Eh, that corresponds to a temperature value of e.g. 33°C. This data byte is stored within a register in the CPU 18 and upon its reception an interrupt is generated and thus the value can be delivered. At time t24, a confirmation message is sent to the SIM card 20 forwarding the read value "3E", and the SIM card 20 returns an "OK" at time t25, to indicate that no further messages are to send. The ME 16 waits for the polling interval before sending a new status message at t26, on which the SIM card replies with an "OK" at t27.

Also here, the application dependent functionality is collected in the HW control means in the SIM card. In this example, the ME is totally unaware of the actual meaning of the text string "I2C4D" and the consequences this string will have on the control performed by the SIM card.

The generalization of the "GET INPUT" command to be interpreted as read orders from inputs can be used for in principle all type of inputs. A few further examples could be:

| Command | Generalized interpretation |
|---|---|
| GET INPUT "Input 4" | Read the digital Input 4 and return value |
| GET INPUT "ADC1" | Read ADC1 and return value |
| GET INPUT "I2C4D" | Read the I2C address 4D and return value |
| GET INPUT "UART1 = Measure" | Send "Measure" through TXD and read string of characters received through RXD and return this string of characters |

Anyone skilled in the art realizes the potentials using these generalized STK read commands.

By doing minor required software modifications in the ME, the present invention provides the cellular module with the ability to interact and control external hardware peripherals connected to it. The intelligence of the application will reside in the SIM card and the interaction with the external world will be performed via STK commands together with specific software drivers in the ME that make the right interpretation of the command.

An alternate way of implementing the idea of the present invention could be to use e.g. "RUN AT COMMAND", which is another proactive SIM command that asks the ME to execute an AT command. A set of new and proprietary AT commands that perform read/write operations on the interfaces should be defined for this purpose. The final result would be more or less the same as described above. Anyone skilled in the art realizes that there can be a large variety of STK commands, which may be used in a generalized interpretation in order to order the appropriate read or write commands in the interfaces. However, all of them can be defined as direct or indirect read or write STK commands.

In the embodiments illustrated in Figs. 4 and 5, the communication between the ME and the SIM card is restricted by the poll interval. This means that before issuing any command, a status message must be provided by the ME. The status message thus initiates the entire communication. In this manner, the communication concept works on a periodic basis, defined by the poll interval. The poll interval becomes the minimum latency time for the SIM to react according to external hardware events. In Fig. 6 communication events of a slightly modified and preferred embodiment are illustrated. This embodiment provides an interruption from the ME to the SIM whenever changes in the external interface inputs occur. The proposed solution is to issue a SET UP MENU command during the start-up of the module. This is performed the same way as in a standard mobile telephone, when one has more menus added to a standard phone MMI (Man Machine Interface). Whenever there is a change in the inputs of the menu, the ME will inform the SIM via the MENU SELECTION procedure, about the corresponding input that has changed. The application software running in the SIM card can then start to process this information and send orders e.g. in the form of the proactive SIM commands GET INPUT and/or DISPLAY TEXT according to any preferred control strategy of the HW peripherals.

During the start-up of the module, a SET UP MENU is, as illustrated in Fig. 6, issued at to. In the present example the menu options are:
1. INPUT 1 / RATE= 0.1
2. INPUT 2 / RATE= 0.1
3. I2C4D / RATE= 1
4. UART1

The corresponding explanations are:
1. The ME is asked to scan Input 1 every 100 ms
2. The ME is asked to scan Input 2 every 100 ms
3. The ME is asked to read I2C address 4D every second
4. The ME is asked to read RXD in UART1

The MENU SELECTION functionality is then activated. At times t₂₈-t₃₁, status message and "OK" messages are sent back and forth between the ME 16 and the SIM card 20, in analogy with Fig. 4. At time t₃₂, a change occur at input 2 - the Input 2 is set, i.e. having the value of "1". The menu selection functionality reacts on this change, since the Input 2 is included in the list of items to scan or read as number "2". At t₃₃, a menu selection response is sent to the SIM card. The application software running in the SIM card concludes that the value of the input is of interest and a message "91 XX" is returned to the ME 16 at the time t₃₄ in order to inform the ME 16 that the application software of the SIM card 20 wants to deliver a message. The ME 16 answers at 35 by sending a fetch message, and the application software in the SIM card 20 responds at t₃₆ in accordance with a command "GET INPUT", indicating Input 2. The extraction means of the ME 16 interprets the message as a generalized read command and extracts the label of the intended interface as "Input 2". The Input 2 is already read by the HW driver means of the ME 16, and a value "1" is sent to the SIM card 20 at time t₃₇ forwarding the read value "1", and the SIM card 20 returns an "OK" at time t₃₈, to indicate that no further messages are to send. The ME 16 waits for the polling interval before sending a new status message at t₃₉, on which the SIM card replies with an "OK" at t₄₀.

The use of the SET UP MENU speeds up the reaction on a change in a hardware peripheral. Instead of having the SIM card checking the status of the different inputs, the CPU of the ME takes care of monitoring this and notifies the SIM card accordingly. Thus, this mechanism allows closer to real time operation, since it is likely that the scan rate executed in the ME on the specified inputs is easier to achieve than decreasing the poll interval in the SIM - ME interface. It allows then to use higher poll interval times. Besides scanning of the inputs, interrupt mechanisms are also feasible. In the UART case above, a character received in the UART1 will cause an interrupt in the module CPU. This is even closer to real time operation.

Also network events can be monitored in a similar fashion. By using the proactive SIM command SET UP EVENT LIST, the SIM tells the ME what events it wants to be monitored. When one of the specified events in the list occurs, then the ME uses the event download mechanism to transfer details of the event to the SIM. This is a standard STK feature as well. Nevertheless, it can be expanded to report on other new events not defined in the standard yet. After the event is reported to the SIM, it may start issuing DISPLAY TEXT or GET INPUT commands to interact with the rest of the application.

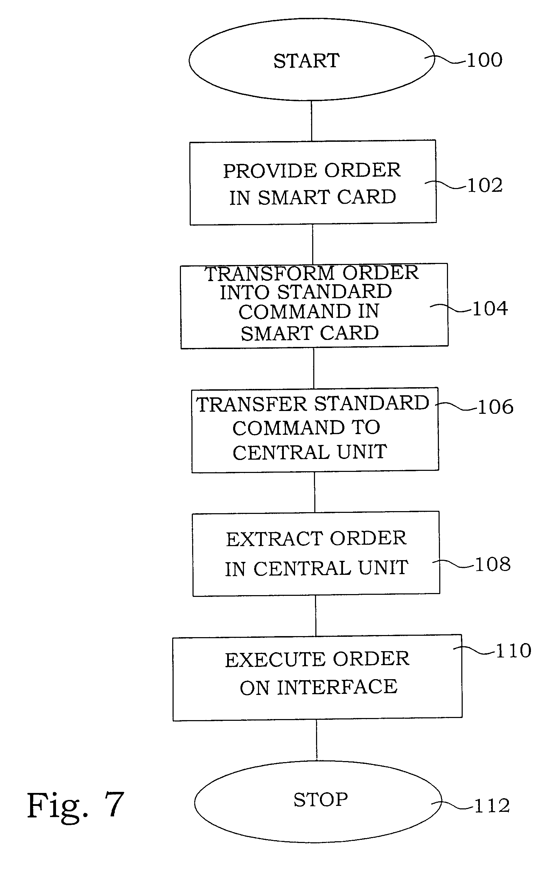

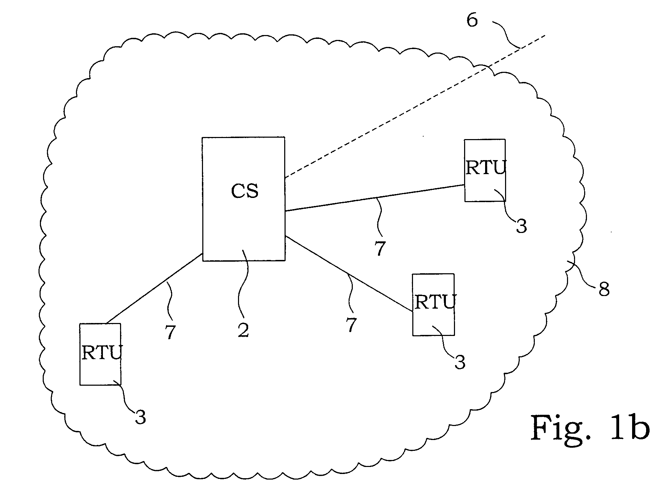

A general method according to the present invention is illustrated by a flow diagram in Fig. 7. The procedure starts in step 100. In step 102, a read/write order is provided in the application software of the SIM card. The read/write order is transformed into a STK command in the SIM card in step 104. The STK command is by conventional means transferred to the ME in step 106. The ME extracts the read/write order from the received STK command in step 108, and in step 110, the ME executes the read/write order on a requested interface. The procedure ends in step 112.

Many machine to machine applications of today can be designed using the cellular module according to the present invention without need for an external controlling CPU, which increases the added value functionality of the module with no extra cost. Furthermore, many SIM manufacturers support JAVA as a programming language for the STK applications. This allows the overall module bundled with the right SIM to be sold as a module with a JVM (JAVA Virtual Machine) that allows for applications to be placed in. JAVA thus becomes a software development environment. It will also advantageously be possible to update the STK application over the air using conventional OTA (Over the air) mechanisms.

The invention described here becomes still more powerful within a system using machine to machine communication, as the one described in figure 1. As an example, a server 2 can send an SMS to a RTU 3 via GSM. The SMS belongs to that kind of SMS to be delivered transparently to the SIM card 20. Upon receipt of said SMS, the ME 16 makes use of the standard SMS-PP download mechanism within the STK protocol, to convey the SMS to the SIM card. As a result of extracting the content of the SMS, an event is triggered in the application software 21 in the SIM card. Then the application software 21 starts the process to issue an order on the HW peripherals 14, e.g. switch on a lamp, a horn, etc., as it has been described above in connection with figure 4.

By using the described invention, a remote server can control scattered RTUs in a cheaper, more flexible way. Anyone skilled in the art can realize the broad range of opportunities offered.

One of the most important benefits of the present invention is that one removes the requirement of a special CPU controlling the RTU operation. The overall material cost of the RTU decreases and the cellular module is made more valuable, because the added functionality. Development times for the complete RTU can be decreased as well, mainly because less hardware is needed at the end. Moreover, standard STK commands are used, which means that only the ME part needs software modifications but the SIM - ME interface remains unchanged.

In the embodiments above, the RTU is a part of a cellular communication system. However, as mentioned earlier, the RTU may instead be part of another type of communication systems, based e.g. on physical links, or on hybrides inbetween. In such cases, the cellular communication module is replaced by another communication module and the ME is replaced by another central unit, taking care of the communication in such communication systems. Also in a more generalized case, where the terminal is not a remote terminal of a communication system, but just an autonomous terminal, the communication module is replaced by a general main device of the terminal and the central unit, corresponding to the ME, is consequently not used for any system communication at all. All communication performed to and from the main device constitutes by the communication to and from the hardware peripherals and the smart card. A CCM is thus a special case of a main device of the terminal, and the ME is a special case of a central unit of the main device.

In the above description, a SIM card has always been used for containing the controlling application software. However, any other type of smart card can also be used according to the same basic ideas. In such cases, one may instead making use of other standard communication protocols, which are used for the normal communication between the smart card and the main device, for transferring of hardware peripherals orders. A SIM card should therefore only be regarded as a typical example of a suitable smart card to use, and, similarly, STK commands are only examples of standard communication commands which advantageously could be used for the communication over the interface between the smart card and the main unit.

It will be understood by those skilled in the art that various modifications and changes may be made to the present invention without departure from the scope thereof, which is defined by the appended claims.

### REFERENCES

WO 01/31953 A1

## Claims

1. Method of device control, **characterized by** the steps of:
in a smart card (20) connected to a main device (10), issuing a read/write order to a hardware peripheral (14) connected to a central unit (16) in said main device (10);
in said smart card (20), transforming said read/write order into a standard command belonging to a standard communication protocol between said smart card (20) and said central unit (16);
transferring said standard command from said smart card (20) to said central unit (16);
in said central unit (16), extracting said read/write order from said standard command; and
executing said extracted read/write order on interfaces (26, 28, 30, 32, 34) to said hardware peripheral (14).

2. Method according to claim 1, **characterized in that** said transforming step further comprises incorporation of a label associated with an interface (26, 28, 30, 32, 34) between said central unit (16) and said hardware peripheral (14) in an argument of said standard command, whereby said executing step takes place over said interface (26, 28, 30, 32, 34).

3. Method according to claim 1 or 2, **characterized in that** said read/write order is a read order, and by the further step of transferring a terminal response from said central unit (16) to said smart card (20).

4. Method according to any of the claims 1 to 3, **characterized in that** said main device is a communication module and said central unit is a unit responsible for external communication of said communication module.

5. Method according to claim 4, **characterized in that** said communication module is a cellular communication module and said central unit is a mobile equipment responsible for controlling the cellular communication of said cellular communication module.

6. Method according to any of the claims 1 to 5, **characterized in that** said smart card is a subscriber identity module card and said standard command is a subscriber identity module application toolkit command.

7. Method according to claim 6, **characterized in that** said transferring step is triggered by status message subscriber identity module application toolkit command sent from said central unit (16) to said subscriber identity module card (20).

8. Method according to claim 6 or 7, **characterized in that** said transferring step comprises transferring of a "DISPLAY TEXT" subscriber identity module application toolkit command.

9. Method according to claim 6, 7 or 8, **characterized in that** said transferring step comprises transferring of a "GET INPUT" subscriber identity module application toolkit command.

10. Method according to any of the claims 6 to 9, **characterized in that** said transferring step is triggered by at least one event in a predetermined list of events occurring in said central unit (16), whereby an event notification message subscriber identity module application toolkit command is sent from said central unit (16) to said subscriber identity module card (20).

11. Method according to claim 10, **characterized by** initiating said predetermined list by sending a "SETUP MENU" subscriber identity module application toolkit command from said subscriber identity module card (20) to said central unit (16), whereby said event notification message is a "MENU SELECTION" subscriber identity module application toolkit command.

12. A terminal unit (3) comprising:
a main device (10) having a central unit (16), in turn having a central processor unit (18);
a smart card (20) connected to said main device (10);
said central processor unit (18) and said smart card (20) having means (44, 46) for communication according to a standard communication protocol;
at least one hardware peripheral (14) connected to said central unit (16) by an interface (26, 28, 30, 32, 34);
said central unit (16) having means (50) for executing read/write orders on said interface (26, 28, 30, 32, 34),
**characterized in that**:
said smart card (20) in turn comprises:
means (40) for issuing a read/write order for said hardware peripheral (14) and
means (42) for transforming said read/write order into a standard command according to said standard communication protocol;
said central unit (16) comprises means (48) for extracting said read/write order from said standard command;
whereby said executing means (50) comprises means for executing said extracted read/write order on said interface (26, 28, 30, 32, 34).

13. A terminal unit according to claim 12, **characterized in that** said terminal unit is a remote terminal unit (3), said main device is a communication module (10), whereby said central unit (16) comprises control means for external communication of said remote terminal unit (3).

14. A terminal unit according to claim 13, **characterized in that** said terminal unit is a mobile terminal (3) of a cellular communication system (1), said main device is a cellular communication module (10), said central unit is a mobile equipment (16), whereby said mobile equipment (16) comprises control means for external cellular communication of said mobile terminal (3).

15. A terminal unit according to any of the claims 12 to 14, **characterized in that** said smart card comprises application software in turn comprising at least a part of said means (44) for communication, said means for issuing a read/write order (40) and/or said means (42) for transforming said read/write order.

16. A terminal unit according to any of the claims 12 to 15, **characterized in that** said smart card is a subscriber identity module card and said standard command is a subscriber identity module application toolkit command.

17. A terminal unit according to any of the claims 12 or 16, **characterized in that** said means (42) for transforming further comprises means for incorporation of a label associated with said interface (26, 28, 30, 32, 34) in an argument of said standard command, and said means (50) for executing comprises means for executing said extracted read/write order on said interface (26, 28, 30, 32, 34) having said label.

18. A smart card (20), having means (44) for communication according to a standard communication protocol,
**characterized by**:
means (40) for issuing a read/write order for a hardware peripheral (14), and
means (42) for transforming said read/write order into a standard command of said standard communication protocol.

19. A smart card according to claim 18, **characterized by** application software in turn comprising at least a part of said means (44) for communication, said means for issuing a read/write order (40) and/or said means (42) for transforming said read/write order.

20. A smart card according to claim 18 or 19, **characterized in that** said smart card is a subscriber identity module card and said standard command is a subscriber identity module application toolkit command.

21. A smart card (20) according to any of the claims 18 to 20, **characterized in that** said means (42) for transforming further comprises means for incorporation of a label of an interface (26, 28, 30, 32, 34) in an argument of said standard command.

22. A mobile equipment unit (16), having a central processor unit (18);
said central processor unit (18) having means (46) for communication according to a standard communication protocol;
at least one output to an interface (26, 28, 30, 32, 34) for a hardware peripheral (14);
said mobile equipment unit (16) having means (50) for executing read/write orders on said interface (26, 28, 30, 32, 34),
**characterized by**
means (48) for extracting a read/write order for said hardware peripheral (14) from a standard command according to said standard communication protocol;
whereby said executing means (50) comprises means for executing said extracted read/write order on said interface (26, 28, 30, 32, 34).

23. A mobile equipment unit (16) according to claim 22, **characterized in that** said mobile equipment unit (16) is part of a cellular communication module (10) in a cellular communication system (1).

24. A mobile equipment unit (16) according to claim 22 or 23, **characterized in that** said standard command is a subscriber identity module application toolkit command.

25. A mobile equipment unit (16) according to any of the claims 22, 23 or 24, **characterized in that** said means (50) for executing comprises means for executing said extracted read/write order on an interface (26, 28, 30, 32, 34) associated with a label incorporated in an argument of said standard command.

26. A communication system (1; 8) having a central server (2) and a number of remote terminal units (3), at least one of said remote terminal units (3) comprising:
a communication module (10) with a central unit (16), in turn having a central processor unit (18);
a smart card (20) inserted into said communication module (10);
said central processor unit (18) and said smart card (20) having means (44, 46) for communication according to a standard communication protocol;
at least one hardware peripheral (14) connected to said central unit (16) by an interface (26, 28, 30, 32, 34);
said central unit (16) having means (50) for executing read/write orders on said interface (26, 28, 30, 32, 34),
**characterized in that**:
said smart card (20) in turn comprises:
means (40) for issuing a read/write order for said hardware peripheral (14) and
means (42) for transforming said read/write order into a standard command according to said standard communication protocol;
said central unit (16) comprises means (48) for extracting said read/write order from said standard command;
whereby said executing means (50) comprises means for executing said extracted read/write order on said interface (26, 28, 30, 32, 34).

27. A communication system according to claim 26, **characterized in that** said remote terminal unit is a mobile terminal (3) of a cellular communication system (1), said communication module is a cellular communication module (10), said central unit is a mobile equipment (16), whereby said mobile equipment (16) comprises control means for external cellular communication of said mobile terminal (3).

28. A communication system according to claim 26 or 27, **characterized in that** said smart card comprises application software in turn comprising at least a part of said means (44) for communication, said means for issuing a read/write order (40) and/or said means (42) for transforming said read/write order.

29. A communication system according to any of the claims 26 to 28, **characterized in that** said smart card is a subscriber identity module card (20) and said standard command is a subscriber identity module application toolkit command.

30. A communication system according to any of the claims 26 to 29, **characterized in that** said means (42) for transforming further comprises means for incorporation of a label associated with said interface (26, 28, 30, 32, 34) between said central unit (16) and said hardware peripheral (14) in an argument of said standard command, and said means (50) for executing comprises means for executing said extracted read/write order on said interface (26, 28, 30, 32, 34) having said label.
